# EUROPEAN PATENT SPECIFICATION

(11) **EP 1 048 385 B1**
(45) Date of publication and mention of the grant of the patent: **01.10.2008**
(21) Application number: 98961371.6
(22) Date of filing: 16.12.1998
(51) Int. Cl.: B23D 61/02

(54) **DISC-SHAPED TOOL**
KREISSCHEIBENFÖRMIGES WERKZEUG
OUTIL EN FORME DE DISQUE

(30) Priority: 16.12.1997 JP 36403297
(43) Date of publication of application: 02.11.2000
(73) Proprietor: KANEFUSA KABUSHIKI KAISHA, Niwa-gun, Aichi 480-0192 (JP)
(72) Inventor: HIRANO, Toyotada Kanefusa Kabushiki Kaisha, Niwa-gun Aichi 480-0192 (JP); SHIMOHIRO, Shinji Kanefusa Kabushiki Kaisha, Niwa-gun Aichi 480-0192 (JP); SOGA, Katsuaki Kanefusa Kabushiki Kaisha, Niwa-gun Aichi 480-0192 (JP)
(74) Representative: Hofer, Dorothea
(86) International application number: PCT/JP1998/005693
(87) International publication number: WO 1999/030862

(56) References cited:
- WO-A-97/37774
- DE-A1- 3 307 702
- JP-A- 5 038 621
- JP-A- 7 276 137
- JP-A- 8 025 138
- JP-B2- 7 008 452

## Description

### TECHNICAL FIELD

This invention relates to a process for manufacturing disc-shaped tools.

### BACKGROUND ART

In steel cutting tools, particularly in a tool which is used with throw-away tips clamped mechanically thereon, tips having a coating film of titanium nitride (TiN), titanium carbide (TiC), titanium carbide nitride (TiC-N) and the like or layered coating films according to a combination of such titanium-containing films have conventionally been used widely. Recently, films of titanium aluminum nitride (Ti-Al-N) are particularly noted because of their excellent durability compared with the above films, and among others those having Ti/Al atomic ratios of 0.3 to 3 are put into practical uses.

In addition to the tools having throw-away tips clamped thereon mechanically, there are also widely used another type of disc-shaped tool 14 typified by the circular saw for cutting steel products, wood and the like, in which wear-resistant tips 12 are brazed to a disc-shaped steel base plate 10. However, when various coatings as described above are to be applied to these tools 14 having brazed tips, the disc-shaped base plate 10 undergoes great deformation and buckling even under relatively small thermal stress. Accordingly, it is difficult to form a coating film which is excellent both in film quality and in adhesion. In other words, while film formation should be carried out with portions to be coated being maintained at a treating temperature of about several hundreds of °C, the base plate is caused to undergo high-temperature plastic deformation by the thermal stress attributed to nonuniform temperature distribution in the base plate. Since the deformation remains as a deformation, the base plate should not be subjected to high-temperature treatments. Thus, treatment of base plate at a low temperature at which no deformation occurs fails to give excellent film quality and adhesion strength.

If any residual deformation occurs in the disc-shaped base plate as described above, the deformation can hardly be removed or can be removed with much difficulties, so that the resulting product is hard to put into practical uses. It is confirmed that such deformation is likely to occur particularly with respect to so-called thin saws (in the case of circular saws) in which the base plates each have a relatively small thickness t relative to its diameter D. For example, relation between t (thickness) and D (base plate diameter) is specified as follows:
t ≤ 1.4 mm in D (200 mm),
t ≤ 1.75 mm in D (250 mm),
t ≤ 2.2 mm in D (300 mm) and
t ≤ 2.5 mm in D (350 mm).
It should be noted, however, that the diameter D of the disc-shaped base plate referred to herein, in the case where the periphery of the base plate is notched (e.g., notches defining gullet in a circular saw) means 2 x radius (from the center to the bottom of the notch), in other words, from the bottom of one notch to the bottom of another notch opposed thereto.

In an observation of film-forming materials to be applied to steel cutting tools, while titanium nitride (TiN) among others forms films well at relatively low treatment temperatures, titanium carbide (TiC) requires high treatment temperatures. The same applies to titanium carbide nitride having a C/N atomic ratio of more than about 0.5. Titanium aluminum nitride (Ti-Al-N) also forms films well by treatment at a high temperature compared with titanium nitride (TiN). These points are also inferred, for example, from the fact that Japanese Patent No. 2,560,541 proposes to interpose an adherent coating layer of titanium nitride (TiN) between the surface of a base plate and a titanium aluminum nitride (Ti-Al-N) film so as to attain a tool having a titanium (Ti)-aluminum (Al) composite nitride coating layer adhered intimately to the surface of a base plate made of a cemented carbide or cermet. When such materials difficult to form films are subjected to film formation, it is necessary that the film formation be carried out at a high temperature (treatment temperature) in view of both adhesion strength and film quality (internal stress and toughness), desirably at a very high temperature. This is indicated, for example, in the paragraph "3.3 Film and Base Material", "Characteristics of Arc Ion-plating Films and Their Industrial Application" (Journal of Surface Technology, vol. 44, No. 9, 1993, published by the Association of Surface Technology).

However, as described above, disc-shaped tools involve an inherent problem of "deformation" attributed to the high coating treatment temperature. Accordingly, conventional disc-shaped tools are merely of all-steel circular saws (metal slitting saws), having tips formed directly by notching peripheries of disc-shaped base plates made of high speed tool steel, coated with titanium nitride (TiN), or of cemented carbide-tipped circular saws (only those which are thick relative to their saw diameters) having a coating of, for example, titanium nitride (TiN) or titanium carbide nitride (Ti-C-N). For example, "Low-temperature Ion plating Film Formation and its Application to Saw-tooth"; Journal of Japanese Metal Society, Vol. 58, No. 6, 1994 contains a description stating that the treatment temperature at which the saw-teeth in cemented carbide-tipped circular saws having an outside diameter of 280 mm and a thickness of 3.7 mm do not undergo deformation should be not higher than 250 °C. The coating film to be formed here is based on titanium nitride (TiN), and a TiC_{0.6}N_{0.4} film is sandwiched between titanium nitride films so as to improve hardness of the coating film. Further, in this study, a rather special system called arc discharge activate reaction ion plating system is used as a PVD system so as to enable film formation at low temperatures.

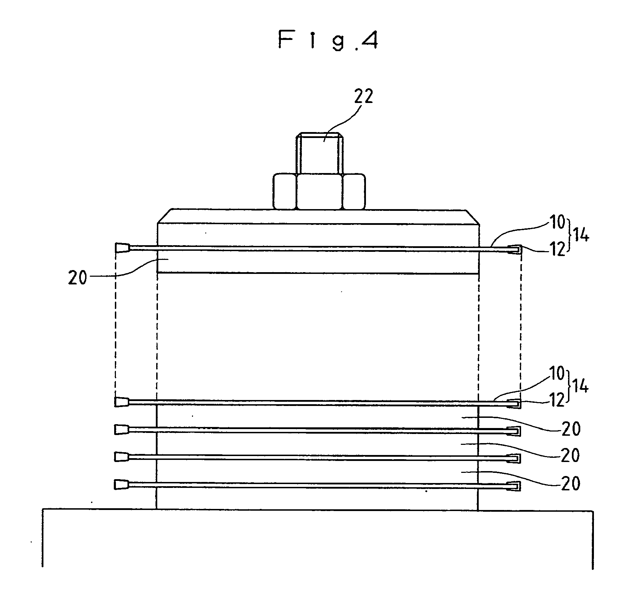

In all-steel circular saws (metal slitting saws) having wear-resistant coating films now put into practical uses, the coating film is formed in each circular saw over the range of about 0.40 - 0.6 times the saw diameter (D) inward from the periphery. The reason is because the metal slitting saws are used by repeating re-sharpening until their radii decrease by several tens millimeters, and thus the coating films should be formed over such range. Meanwhile, the reasons why the coating films are formed over such a wide range as described above even in the cemented carbide-tipped circular saws are:
(1) improvement of corrosion resistance and commercial value of disc-shaped base plates; and
(2) the necessity of coaxially setting a multiplicity of circular saws when they are subjected to physical vapor deposition coating treatment. In other words, the reason is that when a plurality of circular saws are set, ring-shaped shims 20 are interposed between the saws 10, as shown in Fig. 4, so as to secure a clearance between every two adjacent saws, and the size of the shims 20 may be about half as large as the diameter of the circular saws. In any case, there has been no proposition based on an idea to prevent deformation by limiting the range of film formation in disc-shaped base plates to a certain circumferential zone.

In alloy-tipped circular cold saws for cold-sawing iron and steel products such as round rods and pipes and tipped saws for cutting wooden materials, corrugated boards, etc., the disc-shaped base plates constituting the saw bodies should be designed to have small thicknesses so as to achieve improvement of yield of the material in cutting, reduction of mechanical load, reduction of dust etc. For example, steel cutting machines are provided with guides to prevent sawing deviation of the circular saws and to make up for the rigidity of the saws, enabling efficient cutting with thin saws. Meanwhile, tips of circular saws used for such purposes are desired to have improved durability on the standpoint of improving running cost and productivity. Accordingly, it is now an important problem to improve further the durability of tips by applying surface treatment thereto as well as to optimize tip materials.

As the technique of surface treatment, the physical vapor deposition (PVD) method is suitably employed. In order to obtain a coating film having excellent film quality and excellent adhesion by the PVD treatment, a disc-shaped base plate is subjected to ion bombardment in a PVD system prior to film formation to effect purification and preheating of the surface to be coated. Here, the preheating of the disc-shaped base plate may be carried out using a heater housed separately in the PVD system. In those tools whose bodies are disc-shaped base plates, particularly in "thin saws" having a small thickness relative to the diameter like circular saws, even the slightest distribution or difference of temperature can cause various modes of deformation and buckling. If such deformation and buckling occur greatly particularly when the disc-shaped base plate is heated to a high temperature, the base plate undergoes plastic deformation, which remains as a deformation after the base plate is returned to the ambient temperature. This residual deformation is known as dishing (deformation with the number of nodal diameters n = 0) and sine shaped deformation or flaring (deformation with the number of nodal diameters n = 1, 2, 3...). In any case, any residual deformation if occurs in a disc-shaped base plate brings about the necessity of intricate straightning treatment of the base plate, or other problems, for example, uncorrectable deformation. Accordingly, it has been a problem to secure film quality and adhesion strength and also to prevent occurrence of residual deformation by subjecting the disc-shaped base plate to intensive ion bombardment or to a preheating treatment at a higher temperature to heat the portion to be coated.

In document JP 05 038 621 A which is considered to represent the closest prior art, a circular base blade is disclosed. The circular base blade is divided into a central base blade and a ring-shaped circumferential base blade. The ring-shaped circumferential base blade comprises super hard cutting edges. The ring-shaped circumferential base blade is coated with a hard coating film, wherein during the coating process, the central base blade and the ring-shaped circumferential base blade are separated. Afterwards, the central base blade and the ring-shaped circumferential base blade are assembled.

In the case where circular saws are subjected to PVD treatment, the circular saws 14 are fitted on a shaft (indicated by the reference number 22 in Fig. 4) standing at the center of a cylindrical vacuum chamber such that the shaft may penetrate central holes 24 of the circular saws 14, thus setting a multiplicity of circular saws 14 concentrically. Here, a shim 20 is interposed every adjacent two circular saws 14 so as to secure a suitable clearance therebetween, and rings formed by cutting a pipe are conveniently used as the shims. Thus, the ion bombardment concentrates to the portions of the circular saws outer than the shims, and coating layers are formed on such portions only. The present invention prevents effectively occurrence of residual deformation by limiting the range of film formation utilizing the shims. That is, in view of the problems inherent in disc-shaped tools of the prior art having wear-resistant coating films, the present invention is directed to providing a coating technique of forming wear-resistant films capable of realizing high durability tools.

### DISCLOSURE OF THE INVENTION

In order to overcome the problems described above a process for manufacturing disc-shaped tools according to claim 1 is provided. Further developments of the invention are specified in the dependent claims 2-7.

### BRIEF DESCRIPTION OF THE DRAWINGS

Fig. 1 is an illustration of a circular saw as a typical disc-shaped tool having wear-resistant tips brazed thereto; wherein Fig. 1(a) shows a plan view of the circular saw, Fig. 1(b) is an enlarged partial view showing a blade bottom formed between every adjacent two teeth of the circular saw; and Fig. 1(c) is an enlarged radial partial view of the circular saw showing a tooth form having a chip-dividing groove;
Fig. 2 is a graph showing results of calculation in a buckling analysis;
Fig. 3 is a graph showing results of endurance cutting tests in coated saw-teeth; and
Fig. 4 is a schematic drawing showing a state where an annular shim is interposed between every adjacent two circular saws to secure a clearance therebetween.

### BEST MODE FOR CARRYING OUT THE INVENTION

Tests were carried out as indicated in Tables 1 and 3 in an arc ion plating system using titanium as a metal to be evaporated for forming PVD coating. Residual deformation to be caused by ion bombardment was tested for various types of discs and circular saws used as sample base plates to be tested, for example, having a diameter D of 360 mm and a thickness t of 2.25 mm while the size ds of the rings to be used as the shims were changed. The wall thickness of the rings was within the range of 7 to 15 mm for convenience' sake, since pipes having such thicknesses were used as raw materials for them. The width of the ring or the clearance to be secured between the base plates to be stacked up was 20 mm. The intensity of ion bombardment depends on the negative voltage and arc current to be applied to the sample discs and charge time. In the test of Table 1 and that of Table 3, ion bombardment was carried out at the fixed arc current 100 A. Some of the sample discs were preheated by a built-in heater for 60 minutes, followed immediately by ion bombardment. The temperature indicated in the column of preheating refers to the heater temperature. In the test of Table 1, JIS SKS2 test pieces having dimensions of 20 x 5 x 2 (unit: mm) annealed at 180 °C after hardening were placed on the sample discs each at the outermost peripheral position and also at a position inside and adjacent to the ring and were also subjected to the ion bombardment treatment simultaneously to infer the temperature during the ion bombardment treatment based on the drop in the hardness measured after the treatment, which is indicated in Table 1. In Table 1, T₁ means the temperature of the parts of the sample discs inside and adjacent to the rings; T₂ means the outermost peripheral parts of the sample disks; and ΔT means the temperature difference T₂ - T₁

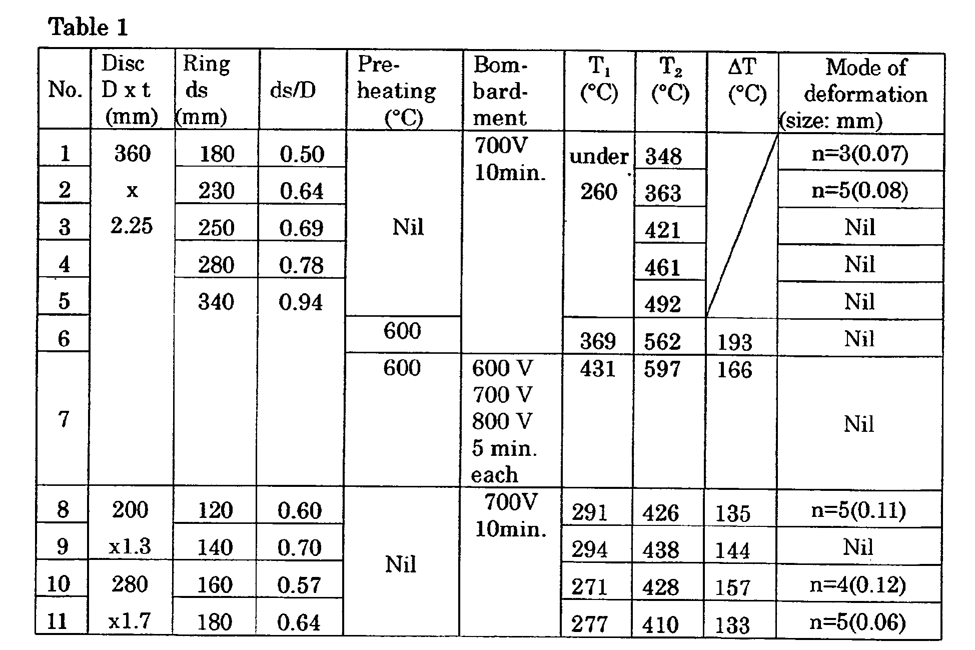

This test demonstrated that the smaller is the ratio of the ring diameter ds to the sample disc diameter D (ds/D), the more easily deformation occurs, although the lower becomes the temperature of the outermost peripheral portion. Meanwhile, when rings with larger diameters are used, deformation does not occur because the order of deformation mode is higher.

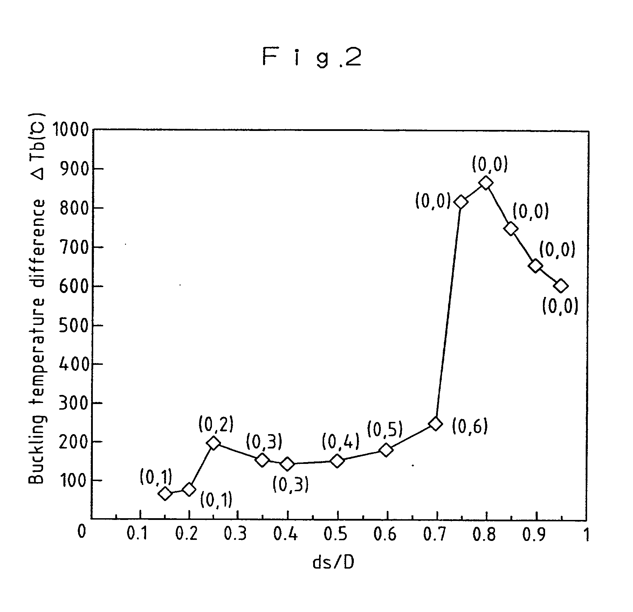

Thus, the following buckling analysis was conducted. In the analysis, the ratio of ring diameter ds to the base plate diameter D (ds/D) was changed and the temperature difference ΔT between the temperature inside the ring and that outside the ring was increased gradually to determine the temperature difference ΔTb at which the sample base plates buckle and the mode of deformation according to the finite element method. For simplicities' sake, a disc was taken, and the diameter D, thickness t and central hole diameter of the disc were set to 360, 2.25 and 040 (unit: mm) respectively. Triangular thin shells were used as the elements. Physical properties of the steel product were set as follows:
Modulus of longitudinal elasticity E =21,000 (kgf/mm²),
Poisson's ratio ν = 0.3, and
Density ρ = 8 g/cm³.
The ring used as the shim was set to have a wall thickness of 7 mm, and restrictive conditions were set such that there occurs no thicknesswise dislocation in the portion abutted against the shim and the periphery of the central hole.
Results of calculation in the above buckling analysis are shown in Fig. 2. Take, for example, (0,3) in the graph shown in Fig. 2. This means a mode of buckling with a number of nodal circles m of 0 and a number of nodal diameters n of 3. Buckling with a number of nodal circles m ≠ 0 was observed neither in the analytical data nor in deformations actually occurred. Therefore, in the following description, the numerical value m shall be omitted. It was found from Fig. 2 that so far as the ratio of ring diameter ds to the disc diameter D (ds/D) is not greater than 0.70,
(1) the order of buckling mode becomes higher as the ds/D ratio increases; and
(2) the buckling temperature difference ΔTb does not change significantly.
   It was also found that if the ds/D ratio is greater than 0.70, the mode of buckling becomes n = 0, and the ΔTb jumps up.

The analytical data showed that if the ds/D ratio exceeds 0.70 where the buckling mode is n = 0, the disc does not undergo buckling unless ΔTb is 500 to 800 °C. The data of Table 1 show that such levels of temperature difference do not actually occur during the PVD treatment, so that the analytical data obtained show that if the size of the ring is set to satisfy ds/D > 0.70, there occurs no residual deformation attributed to buckling in the process of physical vapor deposition. In a comparison of Fig. 2 and the test data of Table 1, let us focus on Test Nos. 1, 2, 8, 10 and 11 where deformations of n = 3 to 5 occurred. While deformations occurred at temperature differences smaller than the ΔTb in the analytical data, the mode of deformation actually occurred substantially agrees with the mode of buckling in the analysis. Further, the analytical data and the test data agreed in that no deformation occurred at a ds/D ratio of about 0.70 or more. It can thus be surmised that the analytical data are substantially close to the actuality.

Next, the diameter and the thickness of the disc were changed to analyze the mode of deformation. It was found, as shown in Table 2, that ΔTb increases in direct proportion to t/D². Since the constant of proportion is dependent upon the ratio of ring diameter ds to disc diameter D (ds/D), the curve of Fig. 2 holds for those cases in common where the diameter D and thickness t are different. However, calibrations on the ordinate is increased or decreased in direct proportion to t/D².

**Table 2**

| t=2.25(mm), ds/D=0.50 | | | D =360(mm), ds/D=0.80 | | | t=2.25(mm), ds/D=0.80 | | |
|---|---|---|---|---|---|---|---|---|
| D(mm) | ΔTb(°C) | ΔTb/(t/D²) | t(mm) | ΔTb(°C) | ΔTb/(t/D)² | D(mm) | ΔTb(°C) | ΔTb/(°C) |
| 1,800 | 6.5 | 9,360,000 | 1.00 | 194.9 | 25,260,000 | 1,800 | 17.54 | 25,260,000 |
| 360 | 162.6 | 9,366,000 | 2.25 | 438.3 | 25,250,000 | | | |
| 90 | 2598.0 | 9,353,000 | 4.50 | 875.9 | 25,230,000 | | | |

In order to verify further the analytical data described above, Test Nos. 12 to 14 (Table 3) were conducted, in which ion bombardment conditions were more intense than in those shown in Table 1. In Test Nos. 12 to 14, ion bombardment was carried out with an application voltage being increased to 900 V which is the upper limit competence of the system (arc current was 100 A). As a result, a great deformation (n = 6) occurred under the condition that the ratio of ring diameter ds to disc diameter D (ds/D) is 0.69 where no deformation occurred in Test No. 3. Meanwhile, in the cases where the ds/D ratio was 0.78 or 0.94, no great deformation as described above occurred.

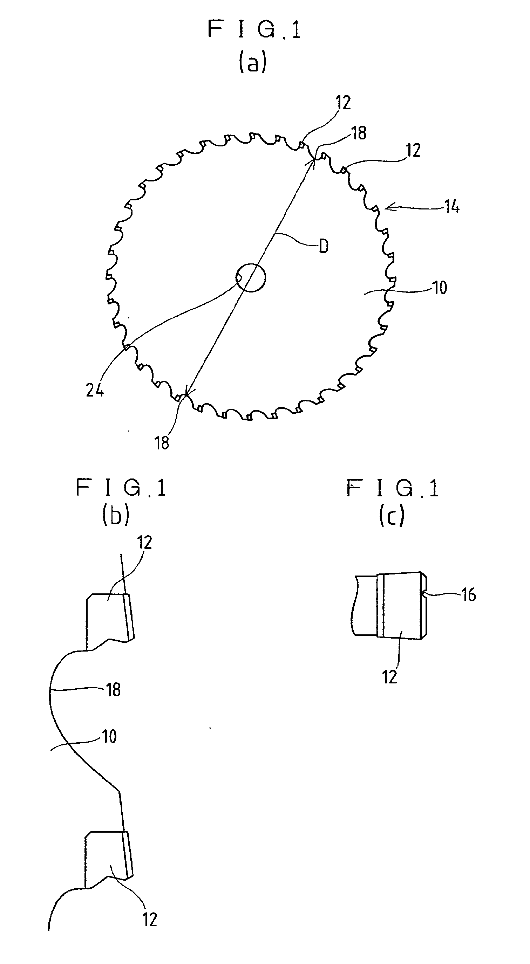

Next, Test Nos. 15 to 22 for disc-shaped base plates for circular saws were conducted. The circular saws are each provided with a gullet having a tooth number of 46. Provided that the diameter D is the distance from a gullet bottom (18 in Fig. 1(a),(b)) to the opposing gullet bottom 18 across the central hole 24 (bottom-to-bottom diameter), the ratio of ring diameter ds to the bottom-to-bottom diameter D (ds/D) is shown. In Test Nos. 15 to 22, no deformation occurred when ds/D was 0.75 or more.

**Table 3**

| No. | Disc or Circular saw D x t (mm) | Ring ds(mm) | ds/D | Preheating (°C) | Bombardment | Mode of deformation (magnitude mm) |
|---|---|---|---|---|---|---|
| 12 | Disc 360 x 2.25 | 250 | 0.69 | Nil | 600/700/ 800/900 V 5 min. each | n=6(0.37) |
| 13 | | 280 | 0.78 | | | Nil |
| 14 | | 340 | 0.94 | | | Nil |
| 15 | Circular saw 200 (bottom-to-bottom diameter: 188) x 1.30 | 85 | 0.45 | 500°C x 30 min. | 700/800 V 5 min. each | n=2(0.18) |
| 16 | | 100 | 0.53 | | | n=4(0.15) |
| 17 | | 120 | 0.64 | | | Nil |
| 18 | | 140 | 0.75 | | | Nil |
| 19 | | 160 | 0.85 | | | Nil |
| 20 | | 180 | 0.96 | | | Nil |
| 21 | | 120 | 0.64 | 600°C x 30 min. | 700/800 V 5 min. each | n=5(0.09) |
| 22 | | 140 | 0.75 | | | Nil |
| 23 | Circular saw base plate 360 (bottom-to-bottom diameter: 351.5) x 2.25 | 280 | 0.80 | 600°C x 60 min. | 700/800/ 900 V 5 min. each | N=0(±about3) |
| 24 | | 300 | 0.85 | | | Nil |
| 25 | | 340 | 0.97 | | | Nil |

Test Nos. 23 to 25 shown in Table 3 were carried out substantially under the service ceiling of the competence of the system. If saw-teeth having tips brazed thereto are subjected to ion bombardment treatment, the saw-teeth are heated to around a temperature at which the silver brazing alloy commonly employed for brazing of cemented carbide is denatured to have reduced strength. In this context, the above tests were carried out under the critical conditions. When a cemented carbide-tipped circular saw brazed using a silver brazing alloy Ag 50-Cu 15.5-Zn 15.5-Cd 16-Ni 3 (%) (solidus: 630 °C, liquidus: 690 °C) corresponding to JIS B Ag 3 employed most commonly was subjected to the ion bombardment treatment, the silver brazing alloy components developed much gases, and it was found by observation after the treatment that the silver brazing alloy layer melted partly. Further, the strength of the silver brazing alloy layer was lowered obviously in most teeth and extremely in some of them. When steel products were cut actually, the tips came off easily.

Therefore, it is essential to use a silver brazing alloy having a much higher melting point and not containing much evaporative components such as zinc when ion bombardment is carried out under such critical conditions as described above. When saw-teeth were fabricated using a silver brazing alloy 6488 (DEGUSSA) (Ag 64-Cu 26-Mn 2-Ni 2-In 6; solidus: 730 °C; liquidus: 770 °C), as an example of such silver brazing alloy and were treated under such critical conditions, neither melting of the brazing alloy layer nor drop in the brazing strength thereof occurred. Meanwhile, components of silver brazing alloy T-14 (TANAKA KIKINZOKU) (Ag 75-Cu 20-Zn 5; solidus: 732 °C; liquidus: 774 °C) developed no gas, nor occurred re-melting of the brazing alloy layer. These results demonstrated that re-melting is induced by abnormal discharge in the brazing alloy layer caused by the increase in the gas pressure attributed to the gases thus developed. Accordingly, in those cases where strong bombardment is to be carried out as in Test Nos. 23 to 25, brazing strength can be secured by using a silver brazing alloy containing 5 % or less, preferably 0 % of zinc (Zn).

In Test No. 23, n = 0 (±) in the column of "Strain mode" means that the circular saw underwent dishing, and that this dishing is caused by over-tensioning of the peripheral portion of the circular saw and such dishing can be reversed with a light force. In other words, the peripheral portion of the circular saw which is induced to undergo heat expansion by the high temperature, nevertheless, it is prevented from expanding fully by the low-temperature portion in the circular saw, and shrinkage by plastic deformation remained (so-called heat tension) as a result. This state is not necessarily undesired, since the heat tension occurred in thin circular saws for cutting lumber and wooden materials operated at high revolution of, for example, 1,500 r.p.m. or more can exhibit rather excellent sawing performance in some cases. However, in circular saws for cutting steel products, saw-teeth are generally driven at a low peripheral speed, so that the dished circular saws are rarely put into practical uses as such. Therefore, while the circular saws need straightning, this state is not a deformation, so that they can resume the original state by hammering uniformly the peripheral portion thereof in the circumferential direction or by subjecting them to shot blasting to expand the peripheral portion. In Test Nos. 24 and 25, although the heat tension as described above occurred but not in the over-tensioned state, so that the circular saws were usable without straightning. Accordingly, on the standpoint of productivity, the ratio of ring diameter ds to disc diameter D (ds/D) is preferably 0.85 or more in steel cutting circular saws.

The present invention was carried out for steel cutting circular saws having an outside diameter = 360 (bottom-to-bottom diameter D = 351.5), a saw-tooth thickness = 2.6, a base plate thickness t = 2.25, a central hole diameter = 40 (unit: mm), and a tooth number = 100 based on the above test, and the resulting effects will be described below. Here, coated tips brazed to the saw-teeth were of a cemented carbide corresponding to JIS M20, and coating conditions and evaluation of the films formed are shown in Table 4.

**Table 4**

| No. | Coasting conditions | | | | | Evaluation of coating appearance |
|---|---|---|---|---|---|---|
| | Coating film | ds (mm) | ds/D | Preheating (°C) | Ion bombardment | |
| 26 | TiN | 230 | 0.65 | Nil | 500V x 5 min 600V x 5 min | Coating stripped partly |
| 27 | TiN | 280 | 0.80 | 600 | 600V 5 min 700V x 5 min | Good, although micro-spalling of intra-film observed through a magnifying lens on C chamfers and at groove corners |
| 28 | TiAlN | 280 | 0.80 | 600 | 600V x 5 min 700V x 5 min | Good, although micro-spalling of intra-film observed through a magnifying lens on C chamfers and at groove corners |
| 29 | TiCN | 280 | 0.80 | 600 | 600V x 5 min 700V x 5 min | Permissible, although micro-spalling of intra-film observed on C chamfers and at groove corners |
| 30 | | | | | 700V x 5 min | |
| | TiAlN | 340 | 0.97 | 600 | 800V x 5 min | Excellent, no micro-spalling of intra-film |
| | | | | | 900V x 5 min | observed |

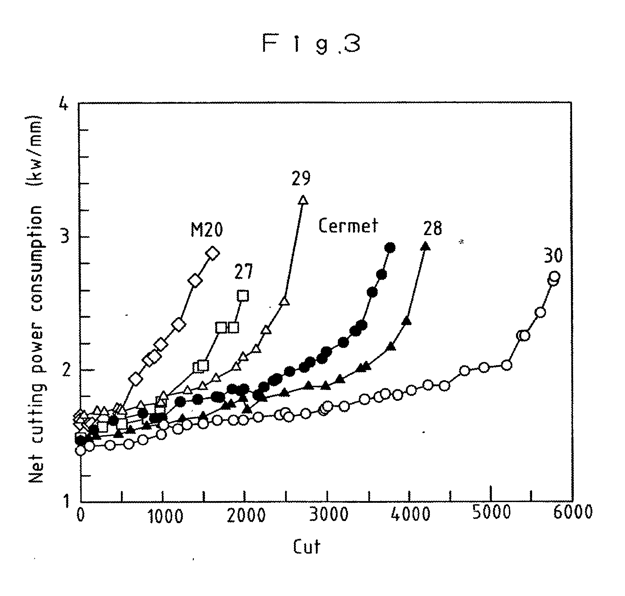

Endurance cutting test was carried out for the coated saw-teeth of Sample Nos. 27 to 30 in comparison with those with the same tips without coating and those with cermet tips (cermet saw-teeth). The results are shown in Fig. 3 (the ordinate represents net power consumption per saw thickness (1 mm)). In this endurance test, a JIS SCM 440H hot-rolled steel round bar (Rockewell hardness: C28-35) with a diameter of 50 mm was selected as a work, and it was cut under the following machining conditions:
spindle revolution: 200 r.p.m.;
feed rate: 600 mm/min.
The cermet used here is referred to as tough cermet and is frequently used as well as the JIS M20 cemented carbide for such purposes. Referring to the tooth shape, in the circular saw 14 shown in Fig. 1(a), the teeth each have a chip-dividing groove 16 at such positions as are offset toward the right and left alternately as shown in Fig. 1(c), and also have a first rake angle of -20° and a peripheral clearance angle of 8°. Further, the tips have 0.3 C chamfered ends.

In Test No. 26 according to the prior art, sufficient coating performance was not expectable, since the film showed poor adhesion strength, although no deformation occurred, and film stripping occurred partly on the circumference and lateral sides of the tips to such a degree as can be observed visually due to the great film stress (the matrix tip surface was exposed in some cases). In the titanium nitride (TiN) coating of Test No. 27, the appearance of the film was good. Although delicate stripping was observed on the C chamfers of the tips and at the corners of groove for dividing chip, it was held within the range of micro-spalling of intra-film, and the matrix tip surfaces were not exposed. The expression "micro-spalling of intra-film" refers to the state where the film is partly chipped thicknesswise to have a reduced film thickness. The titanium aluminum nitride (Ti-Al-N) coating of Test No. 28 had the same quality as in Test No. 27. Although the titanium carbide nitride (Ti-C-N) coating of Test No. 29 also underwent micro-spalling of intra-film, the degree of spalling was slightly higher than those in Test Nos. 27 and 28 and was of a permissible degree.

The saw-teeth in any of Test Nos. 27, 28 and 29 showed improved wear resistance particularly at the peripheral flank and at lateral sides compared with that of the saw-teeth with no coating, showing transition of necessary cutting power consumption as shown in Fig. 3. Thus, it was confirmed that the coating had good quality. It should be noted here that the difference in the performance between the titanium nitride (TiN) coating or the titanium carbide nitride (Ti-C-N) coating and the titanium aluminum nitride (Ti-Al-N) coating was positively brought about by the difference in the high-temperature oxidation resistance, owing to the characteristics of the test conditions of high-speed micro-bite cutting of hard materials, which influenced the wear resistance to appear as the difference in the cutting power. In Test No. 30, silver brazing alloy 6488 (DEGUSSA) was used so as to prevent denaturation and reduction in the strength as occurred in the silver brazing alloy described above. As shown in Fig. 3, the titanium aluminum nitride (Ti-Al-N) coating of Test No. 30 showed the highest durability.

In carrying out the present invention, the following points should be taken into consideration. That is, when a shim is interposed between every two circular saws for application of coating, the circular saws and shims are all desirably stacked to show high concentric accuracy. If the rings or shims offset greatly, nonuniform coating zones are formed circumferentially on the circular saws which can be another cause of deformation. However, a slight offset in arranging the rings is allowable, and nonuniform coating zones formed circumferentially due to partial deformation of the rings or to other reasons are not necessarily causative of troubles. In such cases, the ratio of ring diameter ds to saw diameter D (ds/D) in terms of the mean value of the entire circumference may be considered. Further, air vents may be formed in the rings so as to facilitate evacuation. While coating zones are partially formed inside the ring due to the presence of the air vents, the influence of such coating zones is small and is negligible.

Since the present invention is directed to restricting the coating zone so as to form wear-resistant films depending on application with good adhesion and with excellent film quality, another coating may additionally be applied over a wider range, if necessary, in view of corrosion resistance and commercial value. For example, after coating with titanium aluminum nitride (Ti-Al-N) over the range of 0.85 or more in terms of ds/D, titanium nitride (TiN) coating is applied over the range of 0.50 or more in terms of ds/D. Here, the diameter D, thickness t and the relationship t/D in the discs and the circular saw base plates in Examples of the present invention are as shown in Table 5. If the thickness t is very small relative to the diameter D of the circular saw base plate, i.e., when t/D² < 0.9 x (1/10⁵), the base plate has a too poor rigidity to serve as a circular saw. Further, it was found from Table 5 that an excellent condition can be obtained if the present invention is applied when the relationship between the diameter D and the thickness t (t/D²) is 3.68 x (1/10⁵) or less. To paraphrase this expression into a general relationship, the present invention is effectively applied to disc-shaped tools in which t/D² is 3.7 x (1/10⁵) or less, provided that D represents the diameter of the disc-shaped base plate, and t is the thickness of the base plate.

**Table 5**

| Disc | | | | Circular saw base plate | | |
|---|---|---|---|---|---|---|
| D(mm) | 200 | 280 | 360 | D(mm) | 188 | 351.5 |
| t(mm) | 1.30 | 1.70 | 2.25 | t(mm) | 1.30 | 2.25 |
| | 3.25 | 2.17 | 1.74 | | 3.68 | 1.81 |
| t/D² | | | | t/D² | | |
| | x 10⁻⁵ | x 10⁻⁵ | x10⁻⁵ | | x10⁻⁵ | x10⁻⁵ |

### EFFECT OF THE INVENTION

As has been described heretofore, in the disc-shaped tool according to the present invention typified by a circular saw, with tips brazed to a disc-shaped base plate, for cutting and slotting steel products, wooden materials, etc., a wear-resistant film with high durability can be obtained by setting a range of the tool to be coated with the film with respect to the diameter (D) of the base plate to not less than 0.75 times the diameter (D).

## Claims

1. A process for manufacturing disc-shaped tools (14) comprising the steps of;
- providing steel disc-shaped base plates (10) having wear-resistant tips (12) made of a cemented carbide, cermet or a wear-resistant cast alloy brazed thereto;
- interposing a shim (20) coaxially between every adjacent two base plates (10) so as to secure a clearance between said base plates (10);
- applying a wear-resistant coating film by means of physical vapor deposition treatment on each side of each base plate (10) over an annular zone outer than the shim (20);
wherein the diameter (ds) of the shim (20) is not less than 0.75 times a diameter (D) of the base plates (10).

2. The process according to claim 1, wherein the diameter (ds) of the shim (20) is not less than 0.85 times the diameter (D) of the base plate (10).

3. The process according to claim 1 or 2, wherein a brazing material having a zinc (Zn) content of not more than 5 % is used for brazing the wear-resistant tips (12) to the disc-shaped base plate.

4. The process according to any of claims 1 to 3, wherein the steel disc-shaped base plate (10) is made of tool steel or structural steel.

5. The process according to any of claims 1 to 4, wherein the wear-resistant film contains as a major component a film-forming material selected from titanium carbide (TiC), titanium carbide nitride (Ti-C-N) having a C/N atomic ratio of more than 0.5 and titanium aluminium nitride (Ti-Al-N).

6. The process according to any of claims 1 to 4, wherein the wear-resistant film contains as a major component titanium aluminium nitride (Ti-Al-N), and the disc-shaped tool (14) is a steel-cutting circular saw (14).

7. The process according to any of claims 1 to 6, wherein t/D² is not more than 3.7 x (1/10⁵), provided that the diameter of the disc-shaped base plate (10) is D and the thickness thereof is t.

## Patentansprüche

1. Prozess zur Herstellung scheibenförmiger Werkzeuge (14), der die Schritte aufweist;
- Vorsehen von scheibenförmigen Stahlbasisplatten (10), die verschleißfeste Spitzen (12) aufweisen, die aus Sinterkarbit, Cermet oder einer verschleißfesten Gusslegierung gefertigt sind, die darauf hartgelötet sind,;
- koaxiales Einschieben einer Beilage (20) zwischen alle benachbarten zwei Basisplatten (10), so dass ein Zwischenabstand zwischen den Basisplatten (10) sichergestellt ist;
- Anbringen eines verschleißfesten Überzugs mittels eines physikalischen Dampfabscheideverfahrens auf jede Seite jeder Basisplatte (10) über ein ringförmiges Gebiet, das sich außerhalb von der Beilage (20) befindet;
- wobei der Durchmesser (ds) der Beilage (20) nicht kleiner als das 0,75 fache eines Durchmessers (D) der Basisplatten (10) ist.

2. Prozess nach Anspruch 1, wobei der Durchmesser (ds) der Beilage (20) nicht kleiner als das 0,85 fache des Durchmessers (D) der Basisplatte (10) ist.

3. Prozess nach Anspruch 1 oder 2, wobei ein Lötmaterial, das einen Zink (Zn) Anteil von weniger als 5% aufweist, zum Löten der verschleißfesten Spitzen (12) an die scheibenförmige Basisplatte verwendet wird.

4. Prozess nach einem der Ansprüche 1 bis 3, wobei die scheibenförmige Stahlbasisplatte (10) aus einem Werkzeugstahl oder einem Baustahl gefertigt ist.

5. Prozess nach einem der Ansprüche 1 bis 4, wobei der verschleißfeste Film als eine Hauptkomponente ein film-ausbildendes Material, das aus Titancarbid (TiC), Titancarbidnitrid (Ti-C-N), das ein C/N Atomverhältnis von mehr als 0,5 aufweist, und Titanaluminiumnitrid (Ti-Al-N) ausgewählt ist, aufweist.

6. Prozess nach einem der Ansprüche 1 bis 4, wobei der verschleißfeste Film als eine Hauptkomponente Titanaluminiumnitrid (Ti-Al-N) aufweist, und das scheibenförmige Werkzeug (14) eine stahlschneidende Kreissäge (14) ist.

7. Prozess nach einem der Ansprüche 1 bis 6, wobei t/D² nicht mehr als 3,7 x (1/10⁵) ist, vorausgesetzt, dass der Durchmesser der scheibenförmigen Basisplatte (10) D und die Dicke davon t ist.

## Revendications

1. Procédé pour fabriquer des outils en forme de disque (14) comprenant les étapes consistant à :
prévoir des plaques de base en acier en forme de disque (10) ayant des pointes (12) résistant à l'usure réalisées avec un carbure cémenté, du cermet ou un alliage coulé résistant à l'usure brasé sur celles-ci ;
intercaler une cale (20) de manière coaxiale entre chaque deux plaques de base (10) adjacentes afin de déterminer un jeu entre lesdites plaques de base (10) ;
appliquer un film de revêtement résistant à l'usure au moyen d'un traitement par dépôt en phase vapeur physique de chaque côté de chaque plaque de base (10) sur une zone annulaire externe par rapport à la cale (20) ;
dans lequel le diamètre (ds) de la cale (20) n'est pas inférieur à 0,75 fois un diamètre (D) des plaques de base (10).

2. Procédé selon la revendication 1, dans lequel le diamètre (ds) de la cale (20) n'est pas inférieur à 0,85 fois le diamètre (D) de la plaque de base (10).

3. Procédé selon la revendication 1 ou 2, dans lequel un matériau de brasage ayant une teneur en zinc (Zn) non supérieure à 5% est utilisé pour braser les pointes (12) résistant à l'usure sur la plaque de base en forme de disque.

4. Procédé selon l'une quelconque des revendications 1 à 3, dans lequel la plaque de base en acier en forme de disque (10) est réalisée avec de l'acier à outil ou de l'acier structurel.

5. Procédé selon l'une quelconque des revendication 1 à 4, dans lequel le film résistant à l'usure contient, en tant que composant principal, un matériau de formation de film choisi parmi le carbure de titane (TiC), le nitrure de carbone titane (Ti-C-N) ayant un rapport atomique C/N supérieur à 0,5 et le nitrure d'aluminium titane (Ti-Al-N).

6. Procédé selon l'une quelconque des revendications 1 à 4, dans lequel le film résistant à l'usure contient, en tant que composant principal, du nitrure d'aluminium titane (Ti-Al-N) et l'outil en forme de disque (14) est une scie circulaire de découpe d'acier (14).

7. Procédé selon l'une quelconque des revendication 1 à 6, dans lequel t/D² n'est pas supérieur à 3,7 x (1/10⁵), pourvu que le diamètre de la plaque de base en forme de disque (10) est D et que son épaisseur est t.
